# EUROPÄISCHE PATENTSCHRIFT

(11) **EP 1 094 588 B1**
(45) Veröffentlichungstag und Bekanntmachung des Hinweises auf die Patenterteilung: **05.04.2006**
(21) Anmeldenummer: 00122743.8
(22) Anmeldetag: 19.10.2000
(51) Int. Cl.: H02J 7/00, E05B 65/36

(54) **Schaltungsanordnung zum Betreiben eines Elektromotors**
Circuit arrangement for operating an electric motor
Circuit de mise en oeuvre d'un moteur électrique

(30) Priorität: 22.10.1999 DE 19951018
(43) Veröffentlichungstag der Anmeldung: 25.04.2001
(73) Patentinhaber: Brose Schliesssysteme GmbH & Co. KG, 42369 Wuppertal (DE)
(72) Erfinder: Mack, Rolf, 76547 Sinzheim (DE); Koch, Stefan, 77855 Achern (DE); Pruellage, Arno, 76187 Karlsruhe (DE)
(74) Vertreter: Gesthuysen, von Rohr & Eggert

(56) Entgegenhaltungen:
- EP-A- 0 856 625
- DE-C- 4 240 403
- DE-C- 19 633 202
- US-A- 5 525 891

## Beschreibung

Die Erfindung geht aus von einer Schaltungsanordnung zum Betreiben eines Elektromotors nach der Gattung von Anspruch 1.

Es ist eine Schaltungsanordnung zum Versorgen von elektrischen Verbrauchern bekannt geworden (DE 37 14 193 A), bei der einer Gruppe von Verbrauchern oder sogar jedem einzelnen Verbraucher eine separate Energieversorgung zugeordnet ist. Jede einzelne Energieversorgungsschaltung, die von einer zentralen Energieversorgungsschaltung gespeist wird, enthält eine eigene Batterie zur Erhöhung der Sicherheit gegenüber einem Ausfall der zentralen Energieversorgungsschaltung.

Die Spannungen der Batterien der einzelnen Energieversorgungsschaltungen schwanken in Abhängigkeit einerseits vom Ladestrom, der von der zentralen Energieversorgungsschaltung aufgebracht wird, und andererseits vom Laststrom, der durch den Verbraucher fließt. Einen erheblichen Einfluß auf die Spannungslage der jeweiligen Batterie hat insbesondere der Ladezustand. Die verwendeten Verbraucher müssen hinsichtlich ihrer elektrischen Leistungsaufnahme und hinsichtlich ihrer Spannungsfestigkeit auf die schwankende Batteriespannung abgestimmt sein.

Bei einer weiteren bekannten, den Ausgangspunkt der vorliegenden Erfindung bildenden Schaltungsanordnung (DE 42 40 403 C1), wird ein Elektromotor eines Stellantriebs in einem Kraftfahrzeug von einer Batterie elektrisch versorgt. Zwischen der Fahrzeugbatterie und dem Elektromotor ist eine Steuereinheit angeordnet, die die Spannung der Fahrzeugbatterie von üblicherweise 12 V bis 14 V auf eine konstante Ausgangsspannung der Steuereinheit von 5 V regelt. Es handelt sich bei der Steuereinheit insofern um eine Konstantspannungsquelle. Femer dient die Steuereinheit auch dazu, Steuersignale an den Stellantrieb zu übermitteln. Dies geschieht durch einer Überlagerung der von der Konstantspannungsquelle bereitgestellten Gleichspannung mit einer Wechselspannung. Die Konstantspannungsquelle ist wird dazu genutzt, Störungen in dem Wechselspannungssignal zu vermeiden. Eine ähnliche Schaltungsanordnung zeigt eine separate Energieversorgungsschaltung je Elektromotor (DE 196 33 202 Cl).

Ausgehend von dem zuvor erläuterten Stand der Technik liegt der Lehre der vorliegenden Patentanmeldung das Problem zugrunde, eine Schaltungsanordnung zum Betreiben eines Elektromotors eines Stellantriebs in einem Kraftfahrzeugs anzugeben, die einen flexiblen Einsatz eines Elektromotors bei einfacher Dimensionierung ermöglicht.

Die Aufgabe wird durch die im Anspruch 1 angegebenen Merkmale gelöst.

Die erfindungsgemäße Schaltungsanordnung weist den Vorteil auf, daß der Elektromotor preisgünstig realisiert werden kann durch eine Optimierung auf wenigstens näherungsweise den optimalen Arbeitspunkt. Die Optimierung wird möglich durch die zwischen dem Motor und die zur Energieversorgung verwendete Batterie geschaltete Konstantspannungsquelle, welche die Motorspannung wenigstens näherungsweise auf dem vorgegebenen konstanten Wert, der Nenn-Ausgangsspannung hält. Zudem ist die Möglichkeit einer Veränderung der Nenn-Ausgangsspannung der Konstantspannungsquelle vorgesehen. Eine zeit- und/oder ereignisabhängige Änderung der Ausgangsspannung ermöglicht insbesondere eine Erhöhung der Motorleistung. Mit dieser Maßnahme kann eine Verkürzung eines Verstellvorgangs erzielt werden. Der Stellantrieb bzw. Verstellantrieb ist vorzugsweise in einem Kraftfahrzeug angeordnet, das ein elektrisches Bordnetz aufweist, welches die Batterie als Energiespeicher enthält.

Wenn, wie im Stand der Technik, vorgesehen ist, daß die vorgegebene Nenn-Ausgangsspannung der Konstantspannungsquelle auf einen niedrigeren Spannungswert im Vergleich zu der Batteriespannung festgelegt ist, so ist eine einfache Realisierung der Konstantspannungsquelle mit einem kontinuierlich arbeitenden Parallel- oder Serienregler, der stets einen gewissen Spannungsabfall verursacht, möglich.

Eine andere Ausgestaltung sieht den Einsatz eines getakteten Spannungswandlers als Konstantspannungsquelle vor. Diese Maßnahme ermöglicht die Festlegung der Nenn-Ausgangsspannung der Konstantspannungsquelle auf einen Wert, der sowohl niedriger als auch höher als die Spannung der Batterie sein kann.

Eine vorteilhafte Weiterbildung sieht eine Strombegrenzung vor. Mit dieser Maßnahme wird der Motor wirksam vor einer thermischen Überlastung geschützt.

Eine bevorzugte Verwendung ist bei einem Antrieb eines Elektroschlosses gegeben. Bei dieser Verwendung kommt ein Elektromotor mit vergleichsweise geringer Leistung zum Einsatz, so daß der Aufwand für die Konstantspannungsquelle aufgrund der vergleichsweisen geringen Strombelastung gering bleibt.

Weitere vorteilhafte Ausgestaltungen und Weiterbildungen ergeben sich aus weiteren abhängigen Ansprüchen und aus der folgenden Beschreibung.

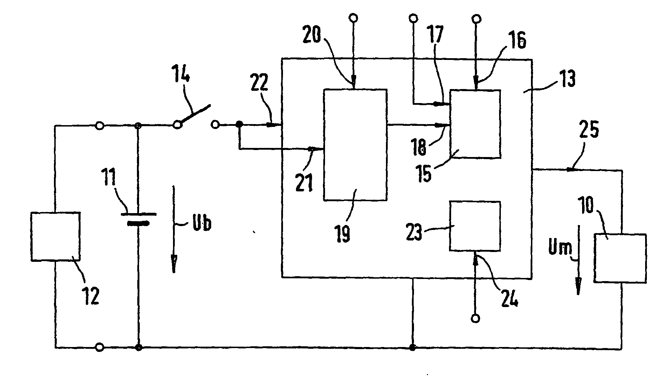

Die Figur zeigt ein Blockschaltbild einer erfindungsgemäßen Schaltungsanordnung zum Betreiben eines Elektromotors.

Die Figur zeigt einen Elektromotor 10, der von einer Batterie 11 mit elektrischer Energie versorgt wird. Am Elektromotor 10 liegt die Motorspannung U_{M} an, während die Batterie 11 die Batteriespannung U_{B} aufweist. An die Batterie 11 ist eine Batterieladevortichtung 12 anschließbar.

Zwischen dem Elektromotor 10 und der Batterie 11 ist eine Konstantspannungsquelle 13 geschaltet. Zwischen der Konstantspannungsquelle 13 und der Batterie 11 liegt ein Schalter 14.

Die Konstantspannungsquelle 13 enthält eine Spannungsänderungsschaltung 15, der eine Spannungsänderungs-Sollwertvorgabe 16, sowie ein erstes und ein zweites Spannungsänderungssignal 17, 18 zugeführt ist. Das zweite Spannungsänderungssignal 18 wird von einem Zeitgeber 19 bereitgestellt, dem ein erstes und ein zweites Startsignal 20, 21 zugeführt sind. Das zweite Startsignal 21 ist von einem Eingangssignal 22 der Konstantspannungsquelle 13 abgeleitet.

Die Konstantspannungsquelle 13 enthält weiterhin eine Strombegrenzung 23, der ein Strombegrenzungs-Sollwertsignal 24 zugeführt ist. Ein Ausgangssignal 25 der Konstantspannungsquelle 13 ist dem Elektromotor 10 zugeführt.

Die erfindungsgemäße Schaltungsanordnung arbeitet folgendermaßen:

Der Elektromotor 10 wird von der Batterie 11 mit elektrischer Energie versorgt. Die Inbetriebnahme erfolgt durch die Schließung des Schalters 14. Dem Elektromotor 10 vorgeschaltet ist die Konstantspannungsquelle 13. Die Konstantspannungsquelle 13 hat die Aufgabe, aus dem Eingangssignal 22, das der Batteriespannung U_{B} entspricht, ein konstantes, fest vorgegebenes Ausgangssignal 25 bereitzustellen, das der Motorspannung UM entspricht. Die Batteriespannung U_{B} hängt insbesondere vom Ladezustand, des weiteren von der Batterietemperatur, vom Alter sowie von weiteren Einflußgrößen ab. Bei der Batterie 11 kann es sich beispielsweise um eine Bleibatterie, eine Nickel-Cadmium-Batterie, eine Lithium-Ionen-Batterie, eine Kondensatorbatterie oder um einen hier nicht genannten Speicher elektrischer Energie handeln. Unter der Annahme, daß eine Bleibatterie mit einer Nennspannung von 12 V als Batterie 11 vorgesehen ist, kann deren Batteriespannung U_{B} im Bereich von 7 V bis 16 V liegen. Der niedrigere Wert entspricht einer stark entladenen Batterie, gegebenenfalls bei zusätzlich hoher Belastung, während der höhere Wert gegen Ende der Batterieladung oder auch bei einem besonders hohen Ladestrom auftreten kann.

Würde der Elektromotor 10 unmittelbar an der Batterie 11 betrieben, so müßte er im Hinblick auf die maximal auftretende Schwankung der Batteriespannung U_{B} ausgelegt werden, um die ordnungsgemäße Funktion eines beispielsweise vom Elektromotor 10 angetriebenen Teils innerhalb der erwarteten Grenzen der Batteriespannung U_{B} sicherzustellen. Die zwischen dem Elektromotor 10 und der Batterie 11 geschaltete Konstantspannungsquelle 13 ermöglicht eine vereinfachte Dimensionierung des Elektromotors 10.

Das Ausgangssignal 25 der Konstantspannungsquelle 13 ist auf eine Nenn-Ausgangsspannung festzulegen, die der Motorspannung UM entspricht. Bei der Motordimensionierung kann von der konstanten Motorspannung UM ausgegangen werden, so daß bei dem funktionalen Zusammenhang zwischen Drehzahl und dem Drehmoment bzw. Motorstrom die bislang als variable Kenngröße zu berücksichtigende Motorspannung entfällt.

Die Spannungsänderungsschaltung 15 ermöglicht das Ändern der an sich fest vorgegebenen Nenn-Ausgangsspannung auf andere Werte, die mit dem Spannungs-Sollwertvorgabesignal 16 vorgegeben werden. Die Vorteile kommen zum Tragen, wenn kurzfristig eine erhöhte Leistung des Elektromotors 10 verlangt wird. Zur zeitlichen Steuerung ist zunächst das erste Spannungsänderungssignal 17 vorgegeben, das insbesondere in Abhängigkeit von einem aufgetretenen Ereignis auftritt.

Eine andere Möglichkeit bietet das zweite Spannungsänderungssignal 18, das der Zeitgeber 19 bereitstellt. Mit dem zweiten Spannungsänderungssignal 18 erfolgt die Spannungsänderung auf den anderen, vorgegebenen, von der Nenn-Ausgangsspannung abweichenden Ausgangsspannungswert für die vom Zeitgeber 19 festgelegte Zeit. Eine erste Möglichkeit, den Zeitgeber 19 zu starten, bietet das erste Startsignal 20, das wieder von einem Ereignis abhängen kann. Eine andere Möglichkeit, den Zeitgeber 19 zu starten, bietet das zweite Startsignal 21, das identisch ist mit dem Eingangssignal 22 der Konstantspannungsquelle 13. Das zweit Startsignal 21 ist somit nichts anderes als ein Einschaltsignal, wobei dem Elektromotor für die vom Zeitgeber 19 vorgegebene Zeit, beginnend mit dem Einschalten des Schalters 14, die gegenüber der Nenn-Ausgangsspannung geänderte Motorspannung zur Verfügung gestellt wird.

Der Elektromotor ist in einem Stellantrieb, der in einem Kraftfahrzeug angeordnet ist, vorgesehen. Das bereits erwähnte Ereignis, von dem zum einen das erste Spannungsänderungssignal 17 und zum anderen das erste Startsignal abhängt, ist beispielsweise das Erreichen einer vorgegebenen Position des Stellantriebs, beispielsweise die Endanschläge. Eine befristete Erhöhung der Motorspannung UM sorgt in diesem Fall dafür, daß die Endanschläge mit Sicherheit erreicht werden können. Ein anderes Ereignis bei einem Stellantrieb könnte beispielsweise eine plötzlich auftretende Schwergängigkeit sein.

Die Konstantspannungsquelle 13 kann beispielsweise einen kontinuierlich arbeitenden Serien- oder Parallelregler enthalten. Der kontinuierlich arbeitende Regler weist den Vorteil auf, daß eine hohe Regelgüte sowie ein geringer Störsignalanteil erreichbar ist. Aufgrund des stets erforderlichen Spannungsabfalls kann die Nenn-Ausgangsspannung bzw. die Motorspannung UM bei dieser Ausgestaltung der Konstantspannungsquelle 13 nur auf einen unteren Wert festgelegt werden, der unterhalb der niedrigsten erwarteten Batteriespannung U_{B}, vermindert um den unvermeidlichen Spannungsabfall an der Konstantspannungsquelle 13 festgelegt wird. Im zuvor genannten Beispiel, bei dem eine Schwankung der Batteriespannung U_{B} zwischen 7 V bis 16 V angenommen wurde, müßte der Elektromotor 10 auf eine Motorspannung UM von beispielsweise 6 V dimensioniert werden.

In einer vorteilhaften Ausgestaltung ist die Konstantspannungsquelle 13 als getaktete Stromversorgungsschaltung realisiert, wobei die Motorspannung UM weitgehend beliebig festgelegt werden kann. Auf die Wiedergabe der Details der Konstantspannungsquelle 13 in ihrer Realisierung als getaktete Stromversorgung wird hier verzichtet und statt dessen auf die Grundlagenliteratur, beispielsweise von U. Tietze und Ch. Schenk, "Halbleiterschaltungstechnik", 9. Auflage, Springer-Verlag, 1989, Seiten 561 - 576, verweisen.

Eine vorteilhafte Weiterbildung sieht die Strombegrenzung 23 vor, mit der der durch den Elektromotor 10 fließende Maximalstrom mit dem Strombegrenzungs-Sollwertvorgabesignal 24 auf einem maximalen Wert begrenzbar ist. Die Strombegrenzung schützt einerseits die Konstantspannungsquelle 13 und andererseits insbesondere den Elektromotor 10 vor einer thermischen Überbeanspruchung durch Begrenzung der maximal zur Verfügung gestellten Leistung. Dieser Wert wird erreicht, wenn die Konstantspannungsquelle 13 den vom Strombegrenzungs-Sollwertvorgabesignal 24 vorgegebenen maximalen Strom fließen läßt und noch in der Lage ist, die Nenn-Ausgangsspannung aufrecht zu erhalten.

Besonders vorteilhaft kann der Elektromotor 10 in Antrieben kleiner Leistung, wie in beispielsweise einem Elektroschloß eines Kraftfahrzeugs, eingesetzt werden. Die besondere Eignung für vergleichsweise kleine Leistungen ergibt sich daraus, daß die nicht im Detail gezeigte Reglerendstufe der Konstantspannungsquelle 13 nur für einen entsprechend geringen Strom auszulegen ist, so daß insgesamt eine einfache und kostengünstige Realisierung der Konstantspannungsquelle 13 möglich ist.

## Patentansprüche

1. Schaltungsanordnung zum Betreiben eines Elektromotors (10) eines Stellantriebs in einem Kraftfahrzeug,
mit einer Batterie (11) als Energiequelle, wobei zwischen Batterie (11) und Elektromotor (10) eine Konstantspannungsquelle (13) vorgesehen ist, so daß der Elektromotor (10) auf eine Motorspannung (U_{M}) auslegbar ist, die der Nenn-Ausgangsspannung der Konstantspannungsquelle (13) entspricht,
**dadurch gekennzeichnet,**
**daß** die Konstantspannungsquelle (13) eine Spannungsänderungsschaltung (15) enthält, daß die Spannungsänderungsschaltung (15) mittels eines Spannungs-Sollwertvorgabesignals (16) das Ändern der an sich fest vorgegebenen Nenn-Ausgangsspannung ermöglicht und daß die Änderung durch ein Spannungsänderungssignal (17, 18) zeitlich steuerbar ist.

2. Schaltungsanordnung nach Anspruch 1, **dadurch gekennzeichnet, daß** die Konstantspannungsquelle (13) als getaktete Stromversorgung realisiert ist.

3. Schaltungsanordnung nach einem der vorhergehenden Ansprüche, **dadurch gekennzeichnet, daß** mit einem der Spannungsänderungsschaltung (15) zugeführten Spannungsänderungs-Sollwertsignal eine Spannungserhöhung vorgebbar ist.

4. Schaltungsanordnung nach einem der vorhergehenden Ansprüche, **dadurch gekennzeichnet, daß** ein Zeitgeber (19) vorgesehen ist, der die Zeit der Spannungsänderung festlegt.

5. Schaltungsanordnung nach Anspruch 4, **dadurch gekennzeichnet, daß** der Zeitgeber (19) durch Einschalten der Konstantspannungsquelle (13) einschaltbar ist.

6. Schaltungsanordnung nach einem der vorhergehenden Ansprüche, **dadurch gekennzeichnet, daß** eine Strombegrenzung (23) vorgesehen ist.

7. Verwendung einer Schaltungsanordnung nach einem der Ansprüche 1 bis 6 in einem Elektroschloß eines Kraftfahrzeugs.

## Claims

1. Circuit arrangement for operating an electric motor (10) of an actuating drive in a motor vehicle,
having a battery (11) as a power source, with a constant-voltage source (13) being provided between the battery (11) and the electric motor (10), so that the electric motor (10) can be designed for a motor voltage (U_{M}) which corresponds to the rated output voltage of the constant-voltage source (13),
**characterized**
**in that** the constant-voltage source (13) contains a voltage-variation circuit (15), in that the voltage-variation circuit (15) allows the rated output voltage, which is firmly prescribed per se, to be varied by means of a predefined setpoint voltage signal (16), and in that the variation can be controlled in terms of time by a voltage-variation signal (17, 18).

2. Circuit arrangement according to Claim 1, **characterized in that** the constant-voltage source (13) is implemented in the form of a pulsed power supply.

3. Circuit arrangement according to either of the preceding claims, **characterized in that** a voltage increase can be prescribed by a setpoint voltage-variation signal which is fed to the voltage-variation circuit (15).

4. Circuit arrangement according to one of the preceding claims, **characterized in that** a timer (19) which defines the duration of the voltage variation is provided.

5. Circuit arrangement according to Claim 4, **characterized in that** the timer (19) can be switched on by switching on the constant-voltage source (13).

6. Circuit arrangement according to one of the preceding claims, **characterized in that** a current-limiting means (23) is provided.

7. Use of a circuit arrangement according to one of Claims 1 to 6 in an electric lock of a motor vehicle.

## Revendications

1. Arrangement de circuit pour faire fonctionner un moteur électrique (10) d'un mécanisme de commande dans un véhicule automobile, comprenant une batterie (11) comme source d'énergie, une source de tension constante (13) étant prévue entre la batterie (11) et le moteur électrique (10) de sorte que le moteur électrique (10) puisse être conçu pour une tension de moteur (U_{M}) qui correspond à la tension de sortie nominale de la source de tension constante (13), **caractérisé en ce que** la source de tension constante (13) contient un circuit variateur de tension (15), que le circuit variateur de tension (15) permet, au moyen d'un signal d'attribution de la valeur de consigne de la tension (16), la modification de la tension de sortie nominale qui est en fait prédéfinie de manière fixe et que la modification peut être commandée dans le temps par un signal de variation de tension (17, 18).

2. Arrangement de circuit selon la revendication 1, **caractérisé en ce que** la source de tension constante (13) est réalisée sous la forme d'une alimentation électrique cadencée.

3. Arrangement de circuit selon l'une des revendications précédentes, **caractérisé en ce qu'**il est possible de prédéfinir une augmentation de la tension au moyen d'un signal de valeur de consigne de la variation de tension acheminé au circuit variateur de tension (15).

4. Arrangement de circuit selon l'une des revendications précédentes, **caractérisé en ce qu'**il est prévu un générateur d'horloge (19) qui détermine la durée de la variation de tension.

5. Arrangement de circuit selon la revendication 4, **caractérisé en ce que** le générateur d'horloge (19) peut être mis en service en activant la source de tension constante (13).

6. Arrangement de circuit selon l'une des revendications précédentes, **caractérisé en ce qu'**il est prévu un limiteur de courant (23).

7. Utilisation d'un arrangement de circuit selon l'une des revendications 1 à 6 dans une serrure électrique d'un véhicule automobile.
